(19) Europäisches Patentamt

European Patent Office

Office européen des brevets

(11) **EP 1 174 641 A1**

(12) **EUROPEAN PATENT APPLICATION**

(43) Date of publication:
**23.01.2002 Bulletin 2002/04**

(51) Int Cl.$^7$: **F16H 1/32**

(21) Application number: **01117152.7**

(22) Date of filing: **13.07.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **Tsujioka, Toshiaki**<br>**Kosai-city, Shizuoka 431-0451 (JP)** |
| (30) Priority: **17.07.2000 JP 2000216044**<br>**27.06.2001 JP 2001194526** | (72) Inventor: **Tsujioka, Toshiaki**<br>**Kosai-city, Shizuoka 431-0451 (JP)** |
| | (74) Representative: **Liedl, Christine, Dipl.-Chem. et al**<br>**Hansmann & Vogeser Patentanwälte, Postfach 70 08 60**<br>**81308 München (DE)** |

(54) **Planetary gear drive**

(57)     A speed change gear drive unit using planet-gears which is simple in construction, can be assembled easily, is low in costs, and can produce an extremely large change gear ratio is provided. The speed change gear drive unit using planet-gears 1 is comprised of an eccentric shaft part 4b eccentric with an input shaft part 4a and rotated integrally with the input shaft part 4a, a rolling member 5 having the same axis as the eccentric shaft part 4b and mounted rotatably on the eccentric shaft part 4b, two gear parts 5A and 5B formed on the rolling member 5, a gear part 6A meshed with one gear part 5A of the rolling member 5 and secured to a casing 2, and a gear part 7A meshed with the other gear part 5B of the rolling member 5 and rotated integrally with an output shaft part 7a.

FIG. 1

**Description**

BACKGROUND OF THE INVENTION

Field of the Invention

The present invention relates to a speed change gear drive unit using planet-gears capable of producing a large change gear ratio despite an extremely simple construction.

Description of the Prior Art

In the past, a speed change gear drive unit using planet-gears having a planet-gear circumscribed in a sun gear and the planet-gear inscribed in an internal gear is relatively small but is able to produce a large change gear ratio, because of which the speed change gear drive unit using planet-gears has been widely put to practical use for various uses.

However, the conventional speed change gear drive unit using planet-gears has many gears, requires connecting arms for connecting gears, connecting flames or the like, and therefore, the construction is complicated and the assembly is not easy. Further, costs become high accordingly.

Further, in the speed change gear drive unit using planet-gears which is relatively small and simple in construction, the change gear ratio is, say, 1/100 or so, failing to produce a large change gear ratio.

SUMMARY OF THE INVENTION

The present invention has been accomplished in order to solve such problems as noted above with respect to the prior arts. It is an object of the present invention to provide a speed change gear drive unit using planet-gears which reduces the number of gears used as small as possible, requires no connecting arm, connecting flame or the like, is simple in construction, is able to assemble easily, is less in cost, and is able to produce an extremely large change gear ratio.

For achieving the aforementioned object, according to the present invention, there is provided a speed change gear drive unit using planet-gears comprising: an eccentric shaft part eccentric with an input shaft part and rotated integral with the input shaft part, a rolling member having the same axis as the eccentric shaft part and mounted on the eccentric shaft part rotatably, two gear parts formed on the rolling member, a gear part meshed with one of the gear parts of the rolling member and secured to a casing, and a gear part meshed with the other gear part of the rolling member and rotated integral with an output shaft part.

It can be designed so that the two gear parts formed on the rolling member are external gears, and the gear part secured to the casing and the gear part rotated integral with the output shaft part are internal gears.

The aforementioned each gear part can be also a bevel gear.

Preferably, the casing comprises two casings fitted together, and a fitted part between the casings is positioned between the gear part secured to the casing and the gear part rotated integral with the output shaft part, because assembling is done extremely easily.

Further, preferably, a balance weight is mounted on the eccentric shaft part in order to prevent vibrations caused by unbalance of inertia force.

BRIEF DESCRIPTION OF THE DRAWINGS

The preferred embodiments of the present invention are described in detail below with reference to the attached drawings, wherein:

FIG. 1 is a longitudinal sectional view of one embodiment of the speed change gear drive unit using planet-gears according to the present invention,

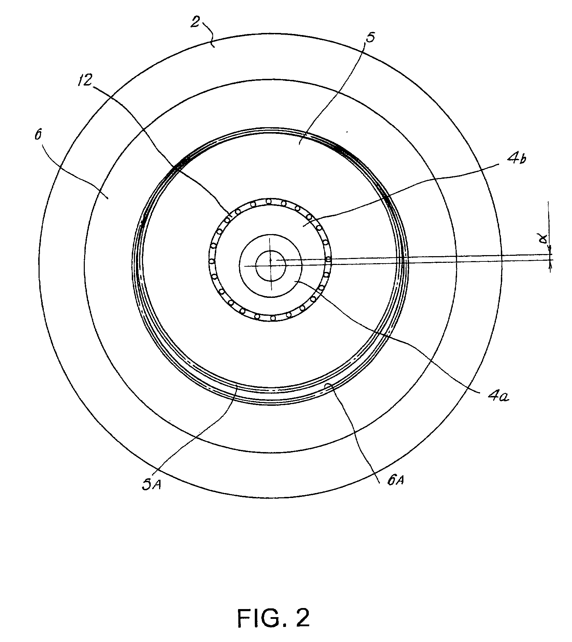

FIG. 2 is a sectional view taken on II-II line of the speed change gear drive unit using planet-gears shown in FIG. 1,

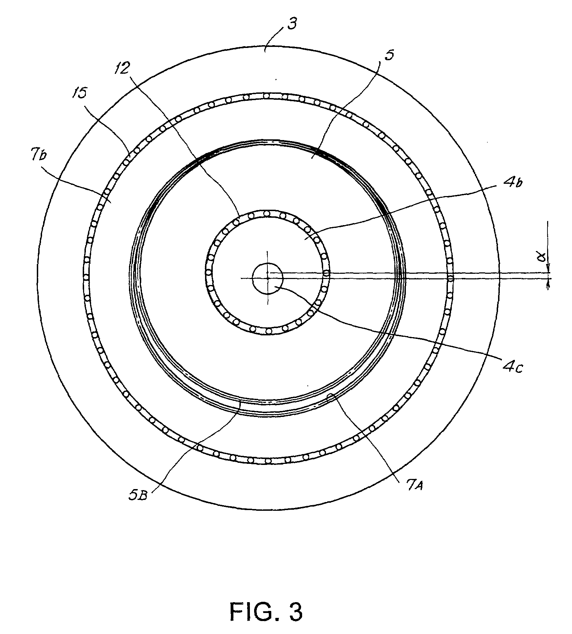

FIG. 3 is a sectional view taken on III-III line of the speed change gear drive unit using planet-gears shown in FIG. 1,
FIG. 4 is an explanatory view of an assembling method of the speed change gear drive unit using planet-gears shown in FIG. 1,
FIG. 5 is an explanatory view for calculating the number of revolutions of an external gear part 5A,
FIG. 6 is an explanatory view for calculating the imaginary number of revolutions of an external gear part 5B,
FIG. 7 is an explanatory view for calculating the number of revolutions of an output shaft part 7a,
FIG. 8 is a longitudinal sectional view of a further embodiment of the speed change gear drive unit using planet-gears according to the present invention,

FIG. 9 is a longitudinal sectional view of another embodiment of the speed change gear drive unit using planet-gears according to the present invention,

FIG. 10 is a longitudinal sectional view of still another embodiment of the speed change gear drive unit using planet-gears according to the present invention,

FIG. 11 is a front view of a balance weight,

FIG. 12 is a front view of the other balance weight,

FIG. 13 is a explanatory view for determining the mass and shape of balance weights, and

FIG. 14 is an explanatory view of an assembling method of the speed change gear drive unit using planet-gears shown in FIG. 10.

## DESCRIPTION OF THE PREFERRED EMBODIMENTS

In the speed change gear drive 1 according to the present invention, two casings 2 and 3 are fitted together, and a planet-gear mechanism is disposed within the casings 2 and 3.

An input side member 4 comprises an input shaft part 4a, an eccentric shaft part 4b, and a support shaft part 4c, the input shaft part 4a and the support shaft part 4c have the same axis, and the eccentric shaft part 4b is made to be eccentric with the input shaft part 4a by $\alpha$.

The input shaft part 4a is inserted into an insert hole 2a formed in the casing 2, and rotatably supported by a ball bearing 11 fitted and mounted on the casing 2.

The eccentric shaft part 4b has a rolling member 5 rotatably mounted on the outer peripheral surface thereof through a needle bearing 12, and the eccentric shaft part 4b and the rolling member 5 have the same axis.

The rolling member 5 is formed with an external gear part 5A having the number of teeth ZA on the input shaft side, and formed with an external gear part 5B having the number of teeth ZB on the output shaft side.

The external gear part 5A is inscribed and meshed with the internal gear part 6A having the number of teeth Z6 formed in a disk member 6, and the disk member 6 is fitted and secured to the inner surface of the casing 2.

An output side member 7 comprises an output shaft part 7a and a rotary body part 7b, and the output shaft part 7a and the rotary body part 7b have the same axis.

The output shaft part 7a is inserted into an insert hole 3a formed in the casing 3, and rotatably supported by a ball bearing 13 fitted and mounted on the casing 3.

The support shaft part 4c is rotatably supported by a ball bearing 14 fitted and mounted on the rotary body part 7b, and the support shaft part 4c and the output shaft part 7a have the same axis.

The external gear part 5B is inscribed and meshed with the internal gear part 7A having the number of teeth Z7 formed in the rotary body part 7b, and the rotary body part 7b comes in rotatable contact with the casing 3 through a needle bearing 15 in the outer peripheral surface.

Fitted parts 2b and 3b of the casings 2 and 3 are positioned between the disk member 6 and the rotary body part 7b.

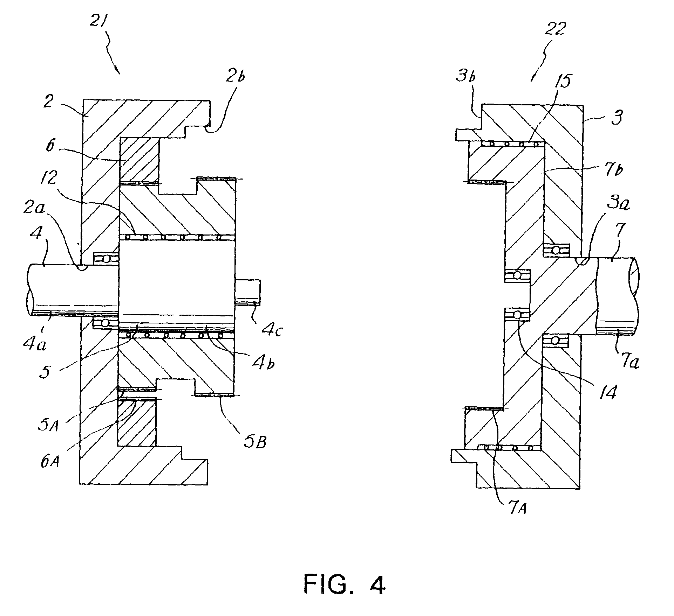

In the following, the assembling method of the speed change gear drive 1 according to the present invention is described with reference to FIG. 4.

The rolling member 5 is rotatably mounted on the eccentric shaft part 4b of the input side member 4 through the needle bearing 12, the disk member 6 is fitted and secured to the inner surface of the casing 2, the external gear part 5A is inscribed and meshed with the internal gear part 6A, while inserting the input shaft part 4a into the insert hole 2a of the casing 2, to constitute an input side assembly 21.

On the other hand, the needle bearing 15 is mounted on the outer peripheral surface of the rotary body part 7b of the output side member 7, the rotary body part 7b is fitted in the inner surface of the casing 3, while inserting the output shaft part 7a into the insert hole 3a of the casing 3, to constitute an output side assembly 22.

Next, the input side assembly 21 and the output side assembly 22 are opposed to each other, the support shaft part 4c is fitted and supported in the ball bearing 14 of the rotary body part 7b, the external gear part 5B is inscribed and meshed with the internal gear part 7A, and the fitted parts 2b and 3b of the casings 2 and 3 are fitted together to complete the speed change gear drive unit using planet-gears 1.

As described above, in the speed change gear drive 1 according to the present invention, since the fitted parts 2b and 3b of the casings 2 and 3 are positioned between the disk member 6 and the rotary body part 7b, the speed change gear drive 1 can be constituted extremely easily, merely by separately constituting the input side assembly 21 including the disk member 6 and the output side assembly 22 including the rotary body part 7b, and combining them.

In the following, the operation and the effect of the speed change gear drive 1 according to the present invention is described with reference to the drawings.

The number of revolutions of the external gear part 5A

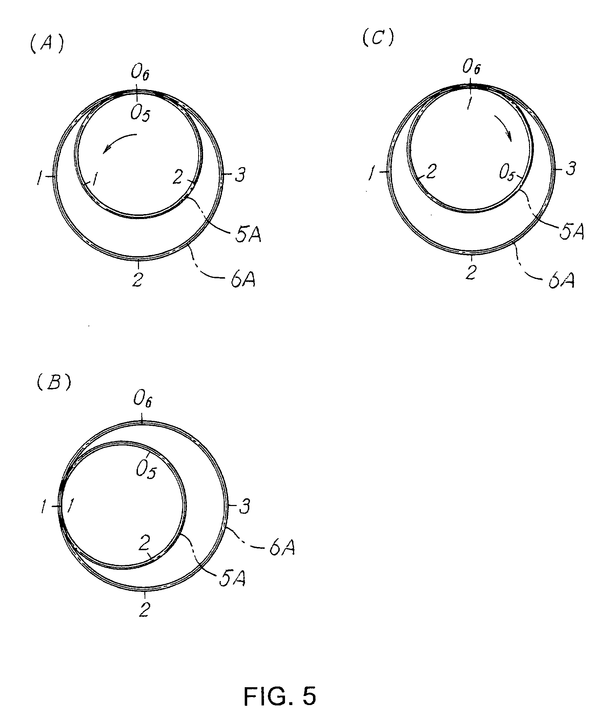

As shown in FIG. 5 (A), when the input shaft part 4a of the input side member 4 is rotated once counterclockwise (indicated by +), the integrated eccentric shaft part 4b also rotates once counterclockwise (+). At this time, since the disk member 6 is secured to the casing 2, the tooth of the external gear part 5A of the rolling member 5 is sequentially meshed with the tooth of the internal gear part 6A counterclockwise (+), as shown in FIG. 5 (B), and the rolling member 5 rolls.

Thereby, when the input shaft part 4a rotates once counterclockwise (+), a reference point 05 of the external gear part 5A rotates clockwise (indicated by -) by a difference between the number of teeth Z6 of the internal gear part 6A and the number of teeth ZA of the external gear part 5A, as shown in FIG. 5 (C).

Accordingly, the number of revolutions NA of the external gear part 5A can be expressed by:

Formula 1

$$NA = -\frac{Z6 - ZA}{ZA}$$

The imaginary number of revolutions of the external gear part 5B

Actually, the rotary body part 7b of the output side member 7 is rotatable, and the external gear part 5A and the external gear part 5B rotate integrally, but imaginarily, a contemplation is made of a case where the rotary body part 7b is fixed, and the external gear part 5A and the external gear part 5B can be rotated separately.

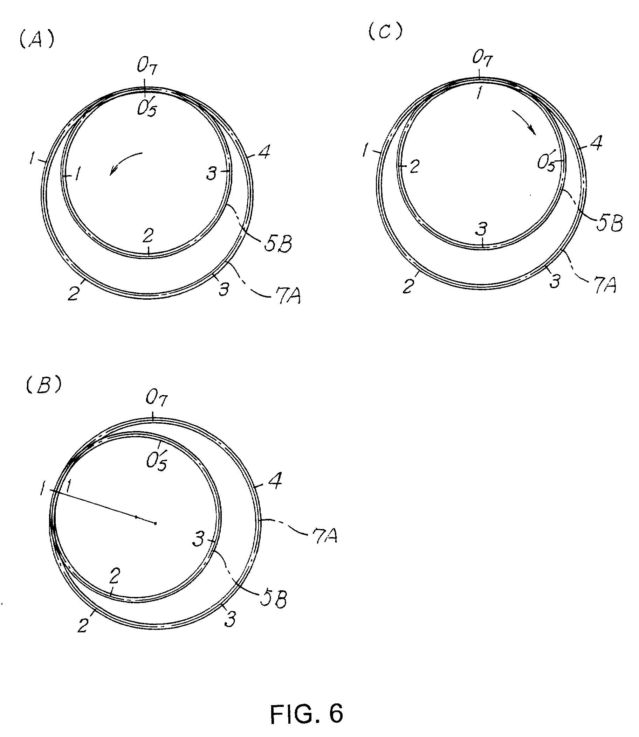

When the input shaft part 4a is rotated counterclockwise (+), as shown in FIG. 6 (A), the tooth of the external gear part 5B is sequentially meshed with the tooth of the internal gear part 7A of the rotary body part 7b counterclockwise (+), as shown in FIG. 6 (B), and the rolling member 5 rolls.

Thereby, when the input shaft part 4a rotates once counterclockwise (+), a reference point O'5 of the external gear part 5B rotates clockwise (indicated by -) by a difference between the number of teeth Z7 of the internal gear part 7A and the number of teeth ZB of the external gear part 5B, as shown in FIG. 6 (C).

Accordingly, the imaginary number of revolutions NB of the external gear part 5B can be expressed by:

Formula 2

$$NB = \frac{Z7 - ZB}{ZB}$$

The number of revolutions of the output shaft part 7a (reduction gear ratio)

Actually, the external gear part 5A and the external gear part 5B rotate integrally. It is therefore natural that the reference point O5 of the external gear part 5A after the input shaft part 4a has been rotated once counterclockwise (+) should be coincided with the reference point O'5 of the external gear part 5B.

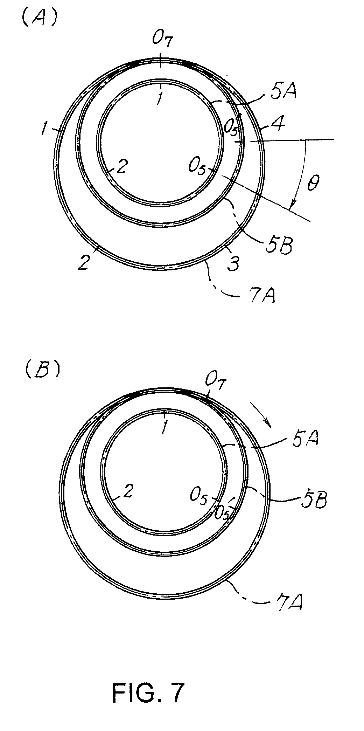

That is, if the external gear part 5B is rotated by an angle difference θ between the reference point O5 of the external gear part 5A and the reference point O'5 of the external gear part 5B, as shown in FIG. 7 (A), correspondingly, the internal gear part 7A is rotated while meshing with the external gear part 5B, as shown in FIG. 7 (B), the actual number of revolutions of the internal gear part 7A is found.

Then, since the rotary body part 7b is integral with the output shaft part 7a, the number of revolutions of the internal gear part 7A is the number of revolutions of the output shaft part 7a.

Accordingly, the number of revolutions of the output shaft part 7a, that is, the reduction gear ratio can be expressed by:

Formula 3

$$N7 = -\left(\frac{Z6 - ZA}{ZA} - \frac{Z7 - ZB}{ZB}\right) \times \frac{ZB}{Z7}$$

Example

In the speed change gear drive unit using planet-gears, let 99 be the number of teeth ZA of the external gear part 5A, 100 be the number of teeth Z6 of the internal gear part 6A, let 100 be the number of teeth ZB of the external gear part 5B, and 101 be the number of teeth Z7 of the internal gear part 7A, then, when the input shaft part 4a is rotated once counterclockwise (+), the number of revolutions of the output shaft part 7a, that is, the reduction gear ratio is expressed by:

Formula 4

$$N7 \approx -\left( \frac{100-99}{99} - \frac{101-100}{100} \right) \times \frac{100}{101} \approx \frac{1}{9999}$$

As described above, the speed change gear drive unit using planet-gears according to the present invention is less in the number of gears, uses no connecting arm, connecting frame or the like, is extremely simple in construction, and is very small, despite of which a large reduction gear ratio (change gear ratio) that is not found in the past can be produced, thus enabling expecting for wide practical use in various uses.

While in the above-described embodiment, the number of teeth ZA of the external gear part 5A is less than the number of teeth ZB of the external gear part 5B, it is noted that the number of teeth ZA of the external gear part 5A may be made to be larger than the number of teeth ZB of the external gear part 5B

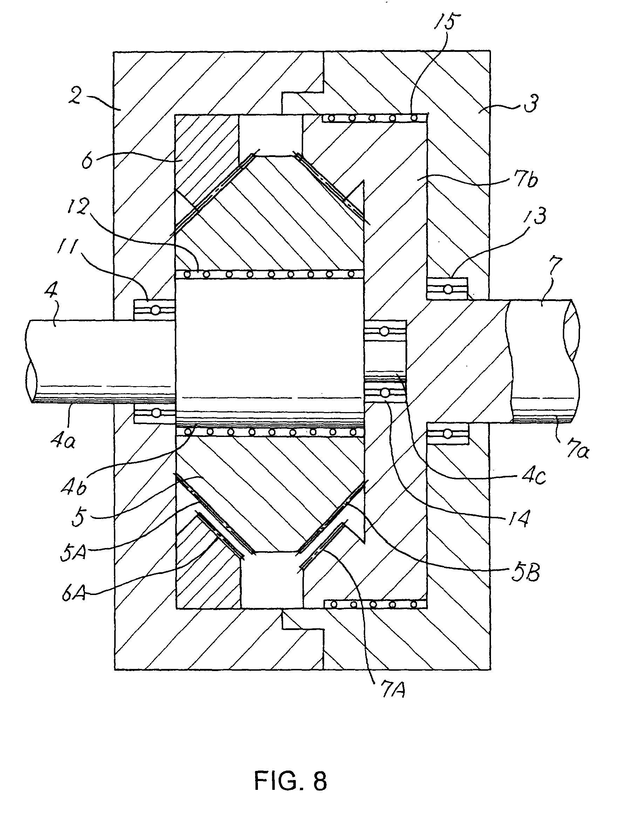

Further, as shown in FIG. 8, the external gear part 5A, the internal gear part 6A, the external gear part 5B and the internal gear part 7A may be bevel gears in place of spur gears.

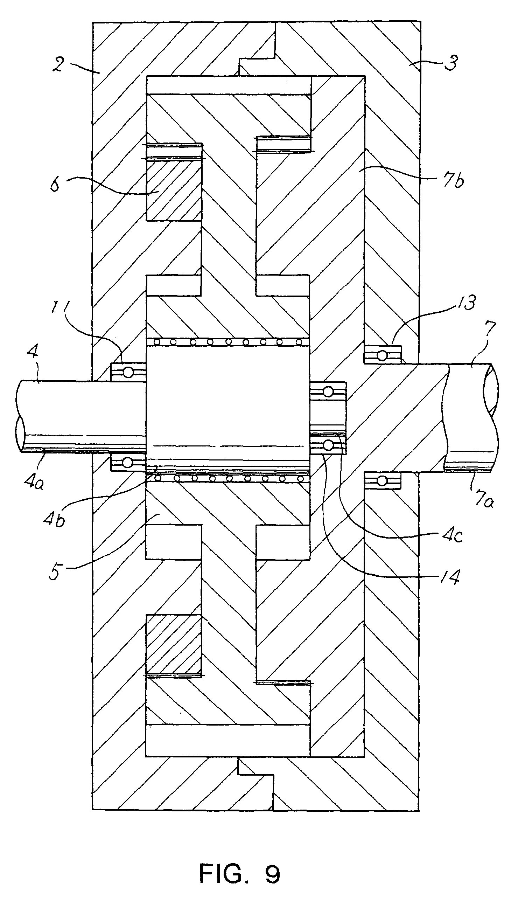

As shown in FIG. 9, the external gear part 5A and the external gear part 5B may be replaced by internal gears, and the internal gear part 6A and the internal gear part 7A may be replaced by external gears.

Further, the external gear part 5A and the internal gear part 6A are not modified, and the external gear part 5B may be replaced by an internal gear, and the internal gear part 7A may be replaced by an external gear.

Also, the external gear part 5A and the internal gear part 6A are not modified, the external gear part 5B may be replaced by an internal gear, and the internal gear part 7A is replaced by an external gear, these gear parts being disposed in the form of the same row.

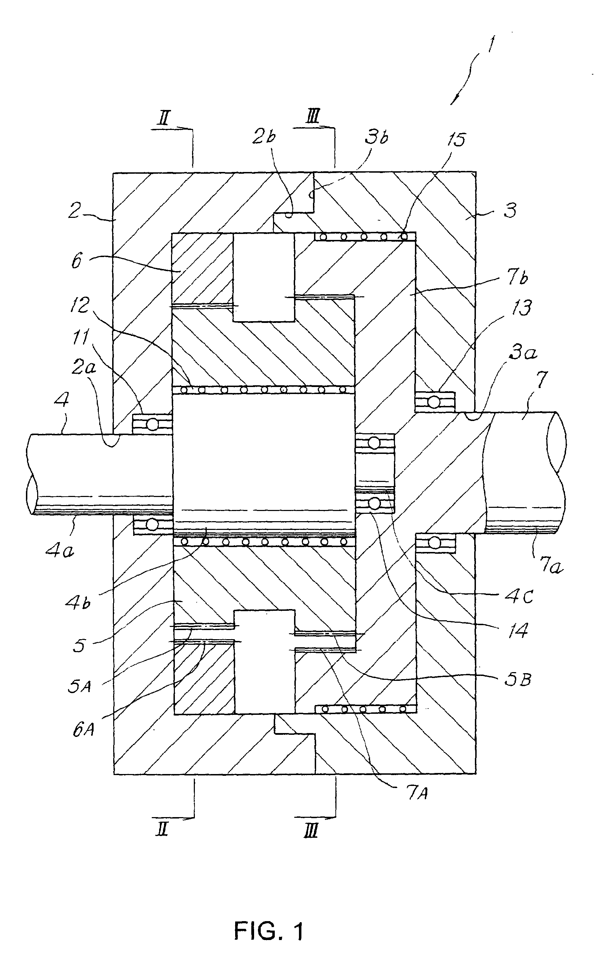

In the speed change gear drive unit using planet-gears 1 shown in FIG. 1, since the eccentric shaft part 4b of the input side member 4 is made to be eccentric with the input shaft part 4a and the support shaft part 4c by $\alpha$, the input side member 4 is vibrated at the time of operation due to the unbalance of inertia force, possibly having bad influences such that the durability is lowered.

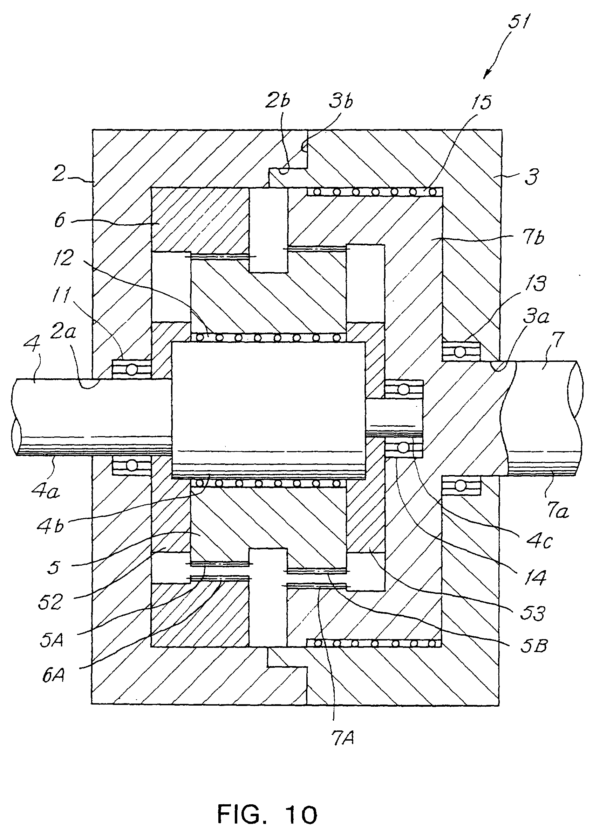

So, a speed change gear drive unit using planet-gears 51 may be constituted as shown in FIG. 10 in order to prevent vibrations of the input side member 4 due to the unbalance of inertia force. The speed change gear drive 51 is similar in constitution to the speed change gear drive unit using planet-gears 1 except that disk-like balance weights 52 and 53 are mounted on both sides of the eccentric shaft part 4b.

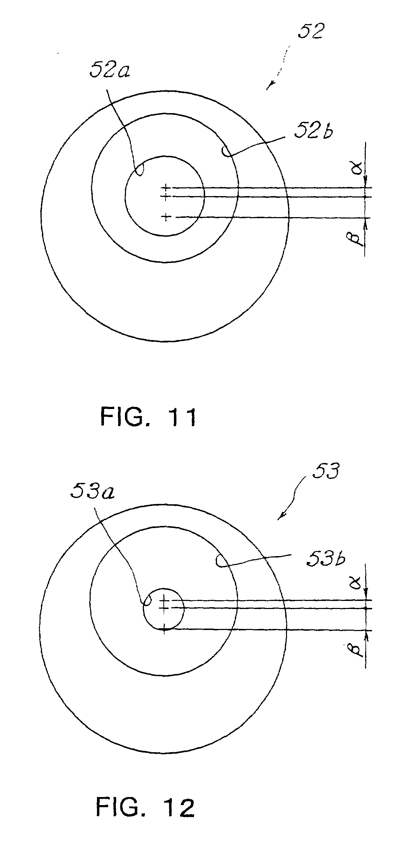

The balance weight 52 is formed with an insert-fitting hole 52a and a fitting concave part 52b, as shown in FIG. 11. The input shaft part 4a of the input side member 4 is inserted and fitted in the insert-fitting hole 52a, and one end of the eccentric shaft part 4b is fitted in the fitting concave part 52b.

The balance weight 53 is also formed with an insert-fitting hole 53a and a fitting concave part 53b, as shown in FIG. 12. The support shaft part 4c of the input side member 4 is inserted and fitted in the insert-fitting hole 53a, and the other end of the eccentric shaft part 4b is fitted in the fitting concave part 53b.

In the balance weights 52 and 53, as compared with the mass of an eccentric-direction portion of the eccentric shaft part 4b, the mass of an opposite-direction portion of the eccentric shaft part 4b is made large to thereby overcome the unbalance of inertia force.

Mass and shape of balance weights 52 and 53

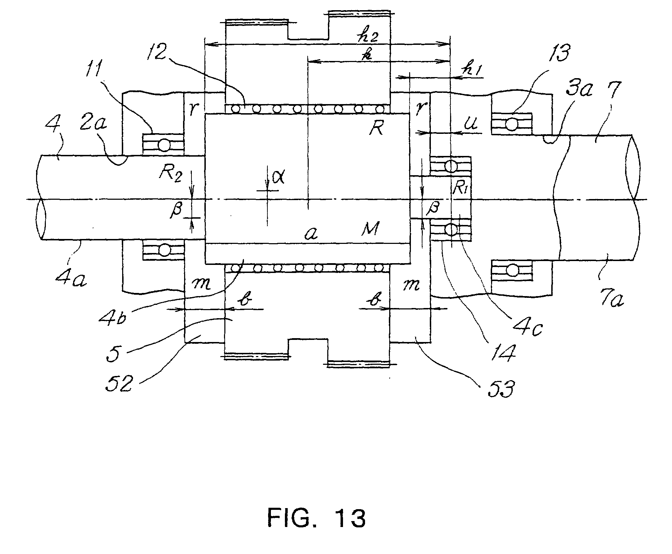

With reference to FIG. 13, the mass and shape of the balance weights 52 and 53 can be determined by the formula on balance of force and the formula on balance of moment mentioned below:

Formula 5

$$m\beta\omega^2 + m\beta\omega^2 = M\alpha\omega^2$$

Formula 6

$$m\beta\omega^2 h_1 + m\beta\omega^2 h_2 = M\alpha\omega^2 k$$

Here, M is the mass of the part of the eccentric shaft part 4b on which the balance weights are not mounted, m is the mass of the part on which the balance weights are mounted, $\alpha$ is the eccentric amount of the eccentric shaft part 4b, $\beta$ is the eccentric amount of the balance weights 52 and 53, $h_1$, $h_2$, and k are the distance from the ball bearing 14 to the center of gravity of the balance weight 53, to the center of gravity of the balance weight 52, and to the center of gravity of the eccentric shaft part 4b respectively, and $\omega$ is the angular velocity.

The mass M of the part of the eccentric shaft part 4b on which the balance weights are not mounted, and the mass m of the part on which the balance weights are mounted are as follows:

Formula 7

$$M = \pi R^2 (a - b)$$

Formula 8

$$m = \pi r^2 b$$

Here, R is the radius of the eccentric shaft part 4b, r is the radius of the balance weights 52 and 53, a is the length of the eccentric shaft part 4b, and b is the thickness of the balance weights 52 and 53.

The distance $h_1$ from the ball bearing 14 to the center of gravity of the balance weight 53, and the distance $h_2$ to the center of gravity of the balance weight 52 are as follows:

Formula 9

$$h_1 = u + b/2$$

Formula 10

$$h_2 = u + a/2$$

Here, u is the distance from the ball bearing 14 to the side surface of the balance weight 53.

By the above-mentioned formulas from 5 to 10, the numerical values of M, m, r, $\beta$, $h_1$, $h_2$ can be calculated, thus, the mass and shape of the balance weights 52 and 53 can be determined.

The mass $m_1$ and $m_2$ of the balance weights 52 and 53 are as follows:

Formula 11

$$m_1 = \pi r^2 b - (\pi R^2 + \pi R_1^2) b/2$$

Formula 12

$$m_2 = \pi r^2 b - (\pi R^2 + \pi R_2^2) b/2$$

**EP 1 174 641 A1**

Here, $R_1$ is the radius of the support shaft part 4c, and $R_2$ is the radius of the input shaft part 4a.

The assembling method of the speed change gear drive unit using planet-gears 51 is also similar to that of the speed change gear drive unit using planet-gears 1 except that the balance weights 52 and 53 are mounted on both sides of the eccentric shaft part 4b at the time of constituting the input side assembly 61.

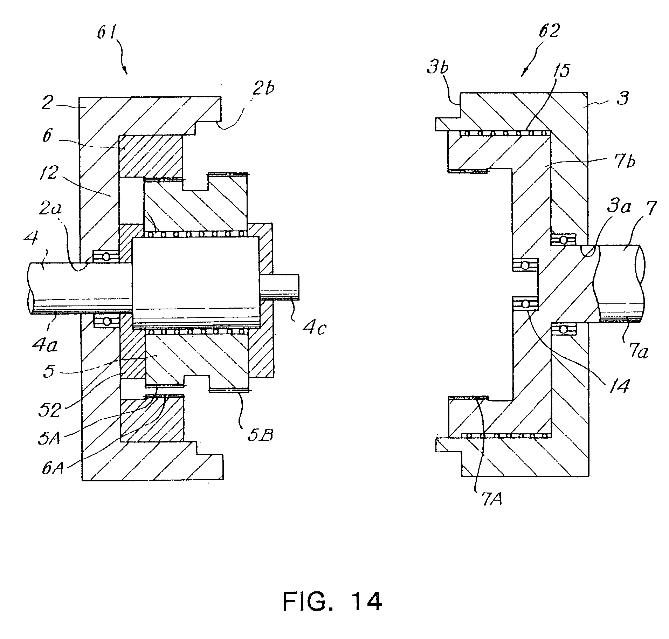

As shown in FIG. 14, first, the rolling member 5 is rotatably mounted on the eccentric shaft part 4b of the input side member 4 through the needle bearing 12. Next, the input shaft part 4a of the input side member 4 is inserted and fitted in the insert-fitting hole 52a of the balance weight 52, one end of the eccentric shaft part 4b is fitted in the fitting concave part 52a, the support shaft part 4c is inserted and fitted in the insert-fitting hole 53a of the balance weight 53, the other end of the eccentric shaft part 4b is fitted in the fitting concave part 53b, and the balance weights 52 and 53 are mounted on both sides of the eccentric shaft part 4b.

Then, after the disk member 6 has been fitted and secured to the inner surface of the casing 2, the input shaft part 4a is inserted into the insert hole 2a of the casing 2, the side surface of the balance weight 52 is brought into contact with the inner surface of the casing 2, the external gear part 5A is inscribed and meshed with the internal gear part 6A to thereby constitute the input side assembly 61.

On the other hand, the needle bearing 15 is mounted on the outer peripheral surface of the rotary body part 7b of the output side member 7, and the rotary body part 7b is fitted in the inner surface of the casing 3, while inserting the output shaft part 7a into the insert hole 3a of the casing 3, to constitute the output side assembly 62.

Then, the input side assembly 61 is opposed to the output side assembly 62, the support shaft part 4c is fitted and supported on the ball bearing 14 of the rotary body part 7b, the external gear part 5B is inscribed and meshed with the internal gear part 7A, and the fitting parts 2b and 3b of the casings 2 and 3 are fitted together to complete the speed change gear drive unit using planet-gears 51.

It is noted that the balance weights may be mounted on the speed change gear drives using planet-gears shown in FIGS. 8 and 9 similarly to the speed change gear drive unit using planet-gears 51.

**Claims**

1. A speed change gear drive unit using planet-gears having a planet gear mechanism disposed within a casing comprising: an eccentric shaft part eccentric with an input shaft part and rotated integrally with the input shaft part; a rolling member having the same axis as the eccentric shaft part and mounted rotatably on the eccentric shaft part; two gear parts formed on the rolling member; a gear part meshed with one gear part of the rolling member and secured to the casing; and a gear part meshed with the other gear part of the rolling member and rotated integrally with an output shaft part.

2. The speed change gear drive unit using planet-gears according to claim 1, wherein the two gear parts formed on the said rolling member are external gears, and the gear part secured to the said casing and the gear part rotated integrally with the said output shaft part are internal gears.

3. The speed change gear drive according to claim 1 or 2, wherein each of the said gear parts is a bevel gear.

4. The speed change gear drive unit using planet-gears according to claims 1 to 3, wherein the said casing comprises two casings fitted, and fitted parts of the casings are positioned between the gear part secured to said casing and the gear part rotated integrally with the said output shaft part.

5. The speed change gear drive unit using planet-gears according to claims 1 to 4, wherein a balance weight is mounted on the said eccentric shaft part.

7

FIG. 1

FIG. 2

FIG. 3

FIG. 4

FIG. 5

FIG. 6

EP 1 174 641 A1

(A)

(B)

FIG. 7

14

FIG. 8

FIG. 9

FIG. 10

FIG. 11

FIG. 12

FIG. 13

FIG. 14

## EUROPEAN SEARCH REPORT

European Patent
Office

Application Number

EP 01 11 7152

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|----------|--------------------------------------------------------------------------------|-------------------|----------------------------------------------|
| X | DE 197 14 528 A (WEISZ HARALD) 25 September 1997 (1997-09-25) * column 5, line 1 - line 5 * * column 8, line 31 - line 41 * * figures 1,22 * | 1-5 | F16H1/32 |
| X | US 4 679 465 A (GOTO YASUO  ET AL) 14 July 1987 (1987-07-14) * figure 1B * | 1 | |
| X | US 2 209 201 A (HILL MYRON F) 23 July 1940 (1940-07-23) * figures 9,10 * | 1 | |

TECHNICAL FIELDS
SEARCHED      (Int.Cl.7)

F16H

The present search report has been drawn up for all claims

| Place of search | Date of completion of the search | Examiner |
|-----------------|----------------------------------|----------|
| BERLIN | 7 November 2001 | Wilson, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 174 641 A1

## ANNEX TO THE EUROPEAN SEARCH REPORT
## ON EUROPEAN PATENT APPLICATION NO.

EP 01 11 7152

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2001

| Patent document cited in search report | | Publication date | Patent family member(s) | | Publication date |
|---|---|---|---|---|---|
| DE 19714528 | A | 25-09-1997 | DE | 29703651 U1 | 10-04-1997 |
| | | | DE | 19714528 A1 | 25-09-1997 |
| | | | EP | 0861995 A2 | 02-09-1998 |
| US 4679465 | A | 14-07-1987 | JP | 1518251 C | 07-09-1989 |
| | | | JP | 61074935 A | 17-04-1986 |
| | | | JP | 63067060 B | 23-12-1988 |
| US 2209201 | A | 23-07-1940 | NONE | | |

EPO FORM P0459

For more details about this annex : see Official Journal of the European Patent Office, No. 12/82